# EUROPEAN PATENT APPLICATION

(11) **EP 4 621 166 A1**
(43) Date of publication of application: **24.09.2025**
(21) Application number: 24382298.8
(22) Date of filing: 19.03.2024
(51) Int. Cl.: E04H 12/12, E04H 12/34, F03D 13/20, B28B 7/00

(54) **METHOD FOR MANUFACTURING A TOWER, TOWER AND CASTING MOLD**

(71) Applicant: SIEMENS GAMESA RENEWABLE ENERGY INNOVATION & TECHNOLOGY, S.L., 31621 Sarriguren (Navarra) (ES)
(72) Inventor: Alonso Gainza, Javier, 31621 Sarriguren (ES); Cal Hernandez, Alexandre, 01009 Vitoria (ES); Unanua Hermoso de Mendoza, Pablo, 31699 Olloki (Navarra) (ES)
(74) Representative: SGRE-Association

(57) **Abstract**

The present invention relates to a method for manufacturing a tower comprising at least two annular concrete sections. The method comprises the following steps:
- Providing a casting mold, wherein the inner surface of the casting mold has a first arc-shaped surface and a second arc-shaped surface facing the first arc-shaped surface,
- Machining the first arc-shaped surface and the second arc-shaped surface of the casting mold,
- Horizontally casting a segment of a cylindrical or frustoconical tube by filling the casting mold with concrete,
- Curing the concrete, and
- Stacking at least two annular concrete sections (8) upon each other.

In the method, at least one of the annular concrete sections is composed of at least two of the horizontally cast segments of a cylindrical or frustoconical tube. Further, the at least one annular concrete section abuts the other annular concrete section with its first arc-shaped surfaces or its second arc-shaped surfaces, thereby forming a dry joint. The present invention further describes a tower that is obtainable by this manufacturing method. Moreover, the present invention relates to a casting mold defining a cavity in the shape of a segment of a cylindrical or frustoconical tube, the shape corresponding to a longitudinally cut segment of a cylindrical or frustoconical tube, wherein the casting mold is segmented such that its first arc-shaped surface and/or its second arc-shaped surface is separable into at least two parts.

## Description

### FIELD OF THE INVENTION

This invention relates to a method for manufacturing a tower, wherein the combination of machining specific surfaces of a casting mold and horizontally casting concrete segments in said casting mold enables the construction of towers with dry horizontal joints. Further, this invention relates to a tower that is obtainable by this manufacturing method and to a casting mold that is designed to amplify the benefits of the inventive method.

### BACKGROUND

Existing methods of constructing towers which are used to support different types of equipment, such as antennae, cellular telephone equipment or wind turbine equipment, vary depending on whether the tower materials are steel or concrete. The decision process used to select whether the tower is to be built out of steel or concrete may depend upon the geographic location, regional resources, height and weight bearing requirements for the tower, and access to the site for constructing the tower. Steel towers are commonly built by bolting steel tubular sections together at intermediate flanges. Generally, as the height of a tower increases, the diameter of the tower's base increases to accommodate higher loads generated by the taller tower. The heights of steel towers are often limited by the diameter of the steel tubular sections that can be physically transported to the construction site without significant modifications to existing roads, bridges, or other right of way constraints. Transporting large diameter steel tubular sections and associated components also increases the cost of tower construction.

Concrete towers have advantages over steel towers because they can be fabricated at or near the tower location when the materials of construction are locally available. Cast-in-place construction methods allow for pouring concrete into forms erected at the tower location. Drawbacks to cast-in-place methods include reduced construction speed and sensitivity to inclement weather. Also, the shape of a typical concrete wind tower is often at least partially tapered, which creates complexity in the concrete pouring process. Alternatively, concrete tower sections can be fabricated or precast and then stacked at the job site to form the tower. Joints between tower segments conventionally require grout to ensure sufficiently strong connections, and it may be necessary to pump grout to tower heights of up to 300 feet or more, which is time consuming, requires specialized equipment and is weather dependent, thereby adding cost to the tower construction.

Although the manufacturing of towers by making use of precast segments offers advantages efficiency-wise, the grouting in the horizontal joints constitutes a significant drawback of this approach.

Against this backdrop, DE 10 2008 016828 A1 describes a manufacturing process in which concrete is cast in a casting mold having a planar floor in order to implement a planar bottom side. After the concrete has reached a predetermined minimum strength, an equalization layer is applied to a join surface of the concrete prefinished part, which is opposite to the bottom side. As soon as the equalization layer has reached a predetermined minimum strength, the concrete prefinished part is placed on an exactly horizontally oriented surface and the equalization layer on the top side is abraded plane-parallel.

This method yields plane-planar surfaces, which enable the omission of the time-consuming and costly grouting in the horizontal joints. However, this approach necessitates two laborious additional method steps, namely the application of an equalization layer and the machining of the equalization layer.

Further, WO 2011/157659 A1 describes a method for the production of a tower of a wind power plant, wherein at least one tubular tower section is produced from annular precast concrete parts having two horizontal contact surfaces, which are arranged on top of one another. After casting, the annular precast concrete parts are set up in a processing station in plant and the two horizontal contact surfaces of the precast concrete parts are machined in a fixture in a plane-parallel, material-removing manner.

Again, this approach has the drawback of necessitating the machining of each annular precast concrete part on its horizontal contact surface.

Moreover, in the distant technical field of producing concrete tubbing for a tunnel lining system, WO 2020/208046 A2 describes a manufacturing process that is fundamentally different from the established vertical casting of concrete segments for towers in that the casting is conducted horizontally.

### SUMMARY OF THE INVENTION

In view of the above, it is therefore an object of the present invention to provide a manufacturing method that facilitates the cost- and time-efficient constructing of towers, to provide a tower that can be constructed in a cost- and time-efficient manner and to provide a casting mold that is designed to amplify the benefits of the innovative manufacturing method.

This object is achieved by the claimed subject-matter as defined in the appended claims.

Recent developments have shown that providing annular concrete sections with a very accurate surface planarity renders it possible to directly stack the annular concrete sections with dry horizontal joints, i.e. without necessitating the application of additional adhesive like mortar, grout or glue in the horizontal joints. However, sufficiently planar surfaces so far necessitate additional elaborate manufacturing steps like the machining of the concrete surfaces, which partly offsets the beneficial effects of using dry joints.

Against this backdrop, the inventors of the present invention noticed that concrete casting generally yields inferior surface qualities on the top side of the cast element. One explanation for this phenomenon is the lack of a positive gravitational effect, i.e. the pressure that the casting mass exerts on the bottom and lateral sides of the cast element, on the top side. Additionally, bubbles that form during the curing process rise to the top and further worsen the surface quality on the top.

On this basis, the inventors devised a new manufacturing process for concrete towers which is based on a horizontal casting process. This process makes use of the finding that, in a horizontal casting process, the future horizontal contact surfaces of the cast elements are positioned on a lateral side of the casting mold. Put differently, the future horizontal contact surfaces of the cast elements are not affected by the above-mentioned detrimental effects that occur on the top surface during casting.

The inventors further surprisingly found that the horizontal manufacturing processes for the production of concrete segments in the distant technical field of tunnel production are, in principle, also suitable for manufacturing towers. While the superior surface quality on the lateral sides of the casting mold does not play a role in the context of tunnel production, the underlying established processes have proven to be a reliable template for the design of a horizontal tower manufacturing process.

Despite the improved surface quality of the future horizontal contact surfaces of the cast elements, obtained by the horizontal casting process, the surface tolerance levels found by the present inventors were, however, not yet sufficient for the envisaged dry joints. Surprisingly, the inventors discovered that machining at least the mold surfaces that are in contact with the future horizontal contact surfaces of the cast elements did greatly improve the final surface qualities of the future horizontal contact surfaces.

In summary, the inventors therefore surprisingly discovered that the combination of machining specific surfaces of a casting mold and horizontally casting concrete segments in said casting mold leads to vastly improved surface qualities, which ultimately enables the production of a concrete tower with dry horizontal joints.

According to the manufacturing method of this invention, a casting mold is provided, wherein the inner surface of the casting mold has a first arc-shaped surface and a second arc-shaped surface facing the first arc-shaped surface. The first arc-shaped surface and the second arc-shaped surface are flat. The first and second arc-shaped surfaces will yield corresponding surfaces in the cast tube segment, which may constitute future horizontal contact surfaces of the annular concrete sections. Subsequently, the first arc-shaped surface and the second arc-shaped surface of the casting mold are machined and a segment of a cylindrical or frustoconical tube is horizontally cast by filling the casting mold with concrete. In the context of the present invention, "horizontally cast" signifies that the casting is conducted with the axis of the tube segment being oriented in an essentially horizontal direction. The axis of the tube segment corresponds to the central axis of the tube.

After the casting, the concrete is cured and at least one annular concrete section is formed of at least two of the horizontally cast segments of a cylindrical or frustoconical tube. Afterwards, at least two annular concrete sections are stacked upon each other, wherein at least one of the annular concrete sections is formed of the at least two horizontally cast tube segments. The stacking is conducted such that the at least one annular concrete section comprising two or more tube segments abuts the other annular concrete section with the first arc-shaped surfaces or the second arc-shaped surfaces of its tube segments, thereby forming a dry joint. A dry joint is a joint that is free of adhesives like mortar, grout or glue.

The machining of the first arc-shaped surface and the second arc-shaped surface preferably precedes the provision of the casting mold.

According to a preferable embodiment of the invention, the casting mold is segmented such that the first arc-shaped surface and/or the second arc-shaped surface is separable into at least two parts. Preferably, the first arc-shaped surface and/or the second arc-shaped surface is radially divided into the at least two parts. In this embodiment, the at least two parts of the first and/or second arc-shaped surface are machined separately. In the context of the present invention, "radially divided" signifies that the arc-shaped surface is divided by a radial cutting line.

On the one hand, it is generally preferable to assemble annular concrete sections from as few tube segments as possible, thereby reducing the number of vertical joints between said tube segments. On the other hand, some towers necessitate large diameters for sufficient structural stability, in particular for wind turbine towers with a large height. At least some of the tube segments of a tower will therefore exhibit a substantial radial length, inter alia exceeding the conventional radial lengths of tube segments in tunnel manufacturing processes. This size imposes serious challenges for the machining, which may preferably be conducted with 5-axis CNC milling machines. Surprisingly, the present inventors discovered that machining the first and/or second arc-shaped surface separately and subsequently re-combining the segmented parts still yields satisfactory surface qualities on the future horizontal contact surfaces of the cast elements.

Preferably, the at least two parts of the first arc-shaped surface and/or the second arc-shaped surface are configured to be openable separately. Hence, the at least two parts can be opened separately before removing the horizontally cast cylindrical or frustoconical tube segments. This facilitates the extraction of the cast tube segment from the casting mold.

According to another preferable embodiment of the invention, one separable part of the first or second arc-shaped surface comprises a groove and the other separable part of the first or second arc-shaped surface comprises a protrusion, wherein the protrusion of the one separable part is configured to engage with the groove of the other separable part in a closed condition of the casting mold. The groove-protrusion arrangement facilitates the accurate positioning of the separated parts of the first and/or second arc-shaped surface of the casting mold.

Segments of a cylindrical or frustoconical tube are preferably longitudinally cut segments of a cylindrical or frustoconical tube. Longitudinally cut signifies segmented along a line that is parallel to the longitudinal axis of the tube segment, i.e. the central axis of the tube.

According to a preferred embodiment of the invention, the annular concrete section comprising at least two of the horizontally cast segments of a cylindrical or frustoconical tube is first preassembled by positioning and joining the horizontally cast segments of a cylindrical or frustoconical tube such that they form an annular concrete section and subsequently positioning the annular concrete section on top of a foundation or another annular concrete section. Preassembling a annular concrete section before stacking it on top of a foundation or another annular concrete section is far less complicated on a preassembly site than on top of a foundation or another annular concrete section, thereby greatly facilitating the overall process.

Preferably, the annular concrete section comprises three horizontally cast segments of a cylindrical or frustoconical tube. It has been found that three segments constitute an excellent compromise between the efforts to reduce the number of vertical joints and the size limitations that are imposed by the necessary transport of the tube sections from the manufacturing site to the building site.

The manufacturing process of the present invention is particularly beneficial for the construction of wind turbine towers.

Preferably, the inner surface of the casting mold comprises a first wall surface and a second wall surface in the shape of a longitudinally cut open cylinder surface or open frustrum cone surface, wherein the first wall surface and the second wall surface are each adjacent to the first arc-shaped surface and the second arc-shaped surface, and the first wall surface faces the second wall surface. Further, the casting mold comprises a first lateral surface and a second lateral surface, wherein the first lateral surface and the second lateral surface are each adjacent to the first arc-shaped surface, the second arc-shaped surface, the first wall surface and the second wall surface.

The method for manufacturing a tower is preferably conducted by casting the at least two segments of a cylindrical or frustoconical tube at a manufacturing site and transporting the resulting segments to the building site of the tower afterwards. This approach constitutes an efficient use of the production means.

The manufacturing process of the present invention yields a tower that can be constructed in a cost- and time-efficient manner.

The casting mold of the present invention defines a cavity in the shape of a segment of a cylindrical or frustoconical tube, the shape corresponding to a longitudinally cut segment of a cylindrical or frustoconical tube. The inner surface of the casting mold has a first arc-shaped surface and a second arc-shaped surface facing the first arc-shaped surface. The inner surface of the casting mold further has a first wall surface and a second wall surface in the shape of a longitudinally cut open cylinder surface or open frustrum cone surface, wherein the first wall surface and the second wall surface are each adjacent to the first arc-shaped surface and the second arc-shaped surface, and the first wall surface faces the second wall surface. The inner surface of the casting mold additionally has a first lateral surface and a second lateral surface, wherein the first lateral surface and the second lateral surface are each adjacent to the first arc-shaped surface, the second arc-shaped surface, the first wall surface and the second wall surface. The casting mold is segmented such that the first arc-shaped surface and/or the second arc-shaped surface is separable into at least two parts. As has been mentioned above, the present inventors surprisingly discovered that, while the size of the first and/or second arc-shaped surface imposes serious challenges for the machining, machining the first and/or second arc-shaped surface separately and subsequently re-combining the segmented parts still yields satisfactory surface qualities on the future horizontal contact surfaces of the cast elements. The casting mold is therefore able to produce very large tube segments with outstanding surface qualities.

Preferably, the first arc-shaped surface and/or the second arc-shaped surface of the casting mold is radially divided into the at least two parts.

According to a preferable embodiment of the invention, the diameter of the annular concrete section is larger than the height of the annular concrete section, preferably 1.5, 2 or 3 times larger than the height of the annular concrete section.

### BRIEF DESCRIPTION OF DRAWINGS

Fig. 1 shows a wind turbine including a concrete tower according to an embodiment of the invention;
Fig. 2 depicts a situation during a method for manufacturing a concrete tower according to an embodiment of the invention;
Fig. 3 shows a cast segment of a cylindrical tube according to an embodiment of the invention in an upright position.
Fig. 4 shows a cast segment of a cylindrical tube according to an embodiment of the invention in a horizontal position.

In the Figures, like reference numerals designate like or functionally equivalent elements, unless otherwise indicated.

### DESCRIPTION OF EMBODIMENTS

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted. Further, it will be immediately understood that the shape of the cavity of the casting mold may correspond to the shape of the resulting cast product. Thus, in the context of this invention, features describing the shape of the cavity of the casting mold can also describe the shape of the segment of a cylindrical or frustoconical tube and vice versa.

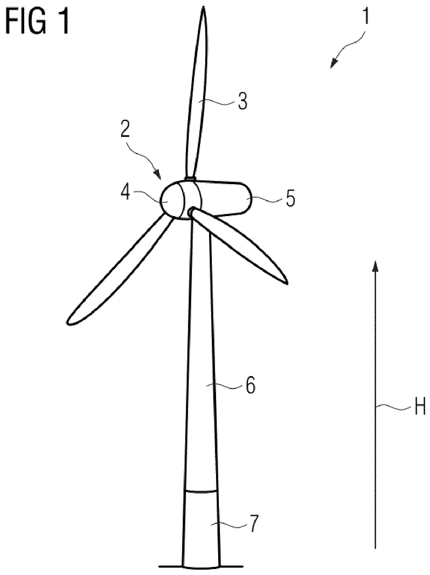

Fig. 1 shows a wind turbine 1 including a concrete tower according to an embodiment of the invention. In this embodiment, the wind turbine 1 comprises a rotor 2 having one or more blades 3 connected to a hub 4. The hub 4 may be connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 may be arranged at the upper end of a tower 6 of the wind turbine 1. The tower 6 may be erected on a foundation 7 such as a monopile or concrete foundation.

The foundation 7 can be connected to and/or driven into the ground or seabed.

The tower 6 extends in a height direction H. The height direction H is a vertical direction of the tower 6 in the erected state.

Although Fig. 1 does not show all individual annular concrete sections, the tower 6 comprises at least two annular concrete sections 8. However, the tower 6 may also comprise more than two annular concrete sections, the more than two tubular tower sections 8 dividing the tower 6 in the height direction H.

The tower 6 can be a concrete tower. In other examples, the tower 6 may also be a hybrid tower comprising annular concrete sections 8 in a bottom portion thereof and a steel tower section (not shown) in a top portion thereof.

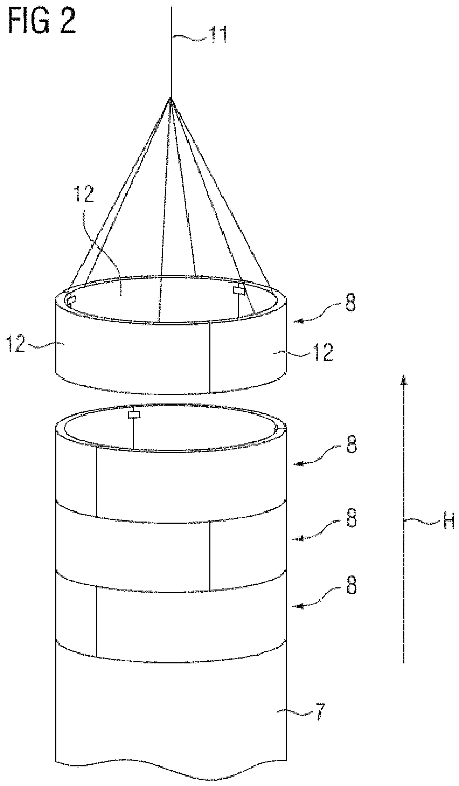

Fig. 2 shows the annular concrete sections 8 during a exemplary embodiment of the manufacturing method of the present invention, namely during the stacking of the annular concrete sections 8. The annular concrete sections 8 are composed of multiple horizontally cast segments of a cylindrical or frustoconical tube 12. The annular concrete sections 8 are hoisted by means of a crane 11 (only partly shown) and are arranged on top of each other. Fig. 2 illustrates an example in which each annular concrete sections 8 is composed of three horizontally cast segments 12.

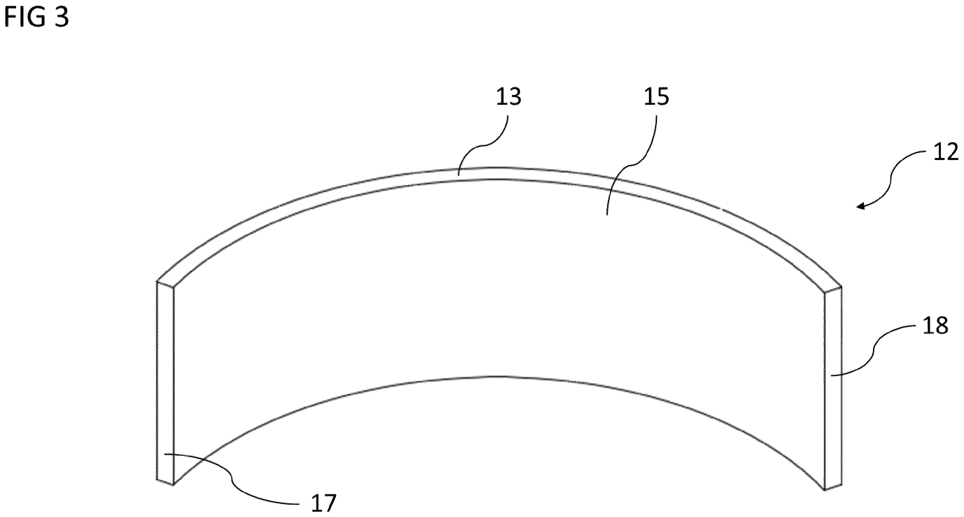

Fig. 3 schematically depicts a horizontally cast segment of a cylindrical or frustoconical tube 12 according to a preferable embodiment of the invention in an upright, i.e. vertical position. The segment 12 has a first arc-shaped surface 13 and a second arc-shaped surface 14 (not shown) facing the first arc-shaped surface 13. The segment 12 further has a first wall surface 15 and a second wall surface 16 (not shown), each in the shape of a longitudinally cut open cylinder surface or open frustrum cone surface. The first wall surface 15 and second wall surface 16 are each adjacent to the first arc-shaped surface 13 and the second arc-shaped surface 14 and the first wall surface 15 faces the second wall surface 16. The segment 12 further has a first lateral surface 17 and a second lateral surface 18. The first wall surface 17 and the second wall surface 18 are each adjacent to the first arc-shaped surface 13, the second arc-shaped surface 14, the first wall surface 15 and the second wall surface 16.

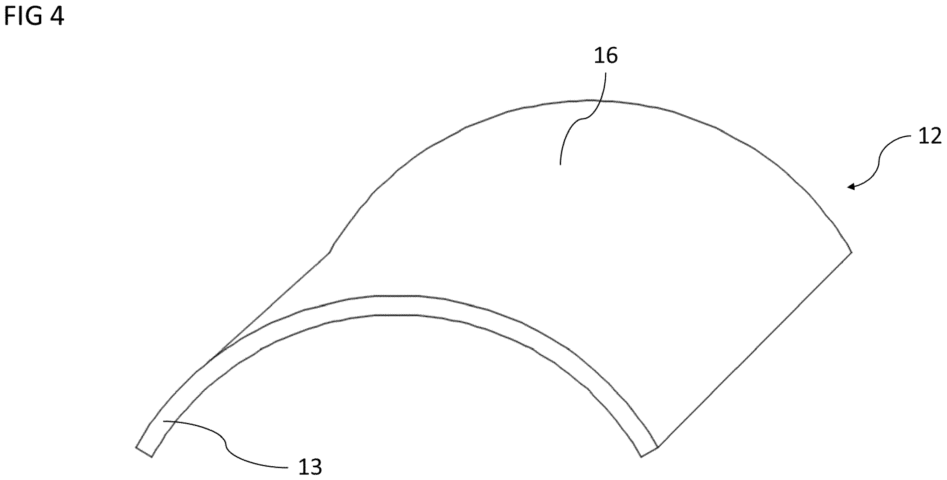

Fig. 4 schematically depicts the horizontally cast segment of Fig. 3 in a horizontal position, i.e. the position in which the segment is cast.

### REFERENCE SIGNS

- 1: Wind turbine
- 2: Rotor
- 3: Blades
- 4: Hub
- 5: Nacelle
- 6: Tower
- 7: Foundation
- 8: Annular concrete section
- 11: Crane
- 12: Segment of a cylindrical or frustoconical tube
- 12': Mold cavity in the shape of a cylindrical or frustoconical tube
- 13: First arc-shaped surface of the segment
- 13': First arc-shaped surface of the mold cavity
- 14: Second arc-shaped surface of the segment
- 14': Second arc-shaped surface of the mold cavity
- 15: First wall surface of the segment
- 15': First wall surface of the mold cavity
- 16: Second wall surface of the segment
- 16': Second wall surface of the mold cavity
- 17: First lateral surface of the segment
- 17': First lateral surface of the mold cavity
- 18: Second lateral surface of the segment
- 18': Second lateral surface of the mold cavity
- H: Height direction of the tower

## Claims

1. Method for manufacturing a tower (6) comprising at least two annular concrete sections (8), the method comprising the following steps:
providing a casting mold, wherein the inner surface of the casting mold has a first arc-shaped surface (13') and a second arc-shaped surface (14') facing the first arc-shaped surface (13'),
machining the first arc-shaped surface (13') and the second arc-shaped surface (14') of the casting mold,
horizontally casting a segment of a cylindrical or frustoconical tube (12) by filling the casting mold with concrete,
curing the concrete, and
stacking at least two annular concrete sections (8) upon each other,
wherein at least one of the annular concrete sections (8) is composed of at least two of the horizontally cast segments of a cylindrical or frustoconical tube (12),
wherein the at least one annular concrete section (8) abuts the other annular concrete section (8) with its first arc-shaped surfaces (13) or its second arc-shaped surfaces (14), thereby forming a horizontal dry joint.

2. Method for manufacturing a tower (6) according to claim 1, wherein the casting mold is segmented such that the first arc-shaped surface (13') and/or the second arc-shaped surface (14') is separable into at least two parts, wherein the first arc-shaped surface (13') and/or the second arc-shaped surface (14') is preferably radially divided into the at least two parts, wherein the at least two parts of the first arc-shaped surface (13') are machined separately and/or the at least two parts of the second arc-shaped surface (14') are machined separately.

3. Method for manufacturing a tower (6) according to claim 2, wherein the at least two parts of the first arc-shaped surface (13') and/or the at least two parts of the second arc-shaped surface (13') are opened separately before removing the horizontally cast cylindrical or frustoconical tube segments (12).

4. Method for manufacturing a tower (6) according to claim 2 or 3,
wherein one separable part of the first arc-shaped surface (13') comprises a groove and another separable part of the first arc-shaped surface (13') comprises a protrusion, and/or
wherein one separable part of the second arc-shaped surface (14') comprises a groove and another separable part of the second arc-shaped surface (14') comprises a protrusion,
wherein the protrusion of the one separable part is configured to engage with the groove of the other separable part in a closed condition of the casting mold.

5. Method for manufacturing a tower (6) according to any one of the proceeding claims, wherein the casting mold defines a cavity in the shape of a longitudinally cut segment of a cylindrical or frustoconical tube (12').

6. Method for manufacturing a tower (6) according to any one of the proceeding claims, wherein the annular concrete section (8) comprising at least two of the horizontally cast segments of a cylindrical or frustoconical tube (12) is first preassembled by positioning and joining the horizontally cast segments of a cylindrical or frustoconical tube (12) such that they form an annular concrete section (8) and subsequently positioning the preassembled annular concrete section (8) on top of a foundation (7) or another annular concrete section (8).

7. Method for manufacturing a tower (6) according to any one of the proceeding claims, wherein one of the annular concrete sections (8) is formed by joining three of the horizontally cast segments of a cylindrical or frustoconical tube (12).

8. Method for manufacturing a tower (6) according to any one of the proceeding claims, wherein the tower (6) is a wind turbine tower.

9. Method for manufacturing a tower (6) according to any one of the proceeding claims, wherein the inner surface of the casting mold further comprises
a first wall surface (15') and a second wall surface (16') in the shape of a longitudinally cut open cylinder surface or open frustrum cone surface, wherein the first wall surface (15') and the second wall surface (16') are each adjacent to the first arc-shaped surface (13') and the second arc-shaped surface (14'), and the first wall surface (15') faces the second wall surface (16'), and
a first lateral surface (17') and a second lateral surface (18'), wherein the first lateral surface (17') and the second lateral surface (18') are each adjacent to the first arc-shaped surface (13'), the second arc-shaped surface (14'), the first wall surface (15') and the second wall surface (16') .

10. Method for manufacturing a tower (6) according to any one of the proceeding claims, wherein the casting of the at least two segments of a cylindrical or frustoconical tube (12) is conducted at a manufacturing site and the resulting segments (12) are subsequently transported to the building site of the tower (6).

11. Tower (6), obtainable by the method of any one of the proceedings claims.

12. Casting mold, defining a cavity in the shape of a segment of a cylindrical or frustoconical tube (12'), the shape corresponding to a longitudinally cut segment of a cylindrical or frustoconical tube, wherein the inner surface of the casting mold has
a first arc-shaped surface (13') and a second arc-shaped surface (14') facing the first arc-shaped surface (13'),
a first wall surface (15') and a second wall surface (16') in the shape of a longitudinally cut open cylinder surface or open frustrum cone surface, wherein the first wall surface (15') and the second wall surface (16') are each adjacent to the first arc-shaped surface (13') and the second arc-shaped surface (14'), and the first wall surface (15') faces the second wall surface (16'), and
a first lateral surface (17') and a second lateral surface (18'), wherein the first lateral surface (17') and the second lateral surface (18') are each adjacent to the first arc-shaped surface (13'), the second arc-shaped surface (14'), the first wall surface (15') and the second wall surface (16'),
wherein the casting mold is segmented such that the first arc-shaped surface (13') and/or the second arc-shaped surface (14') is separable into at least two parts.

13. Casting mold according to claim 12, wherein the first arc-shaped surface (13') and/or the second arc-shaped surface (14') is radially divided into the at least two parts.

14. Casting mold according to claim 12 or 13, wherein the at least two parts of the first arc-shaped surface (13') and/or the second arc-shaped surface (14') are configured to be openable separately.

15. Casting mold according to any one of claims 12 to 14, wherein one separable part of the first arc-shaped surface (13') comprises a groove and another separable part of the first arc-shaped surface (13') comprises a protrusion, and/or wherein one separable part of the second arc-shaped surface (14') comprises a groove and another separable part of the second arc-shaped surface (14') comprises a protrusion, wherein the protrusion of the one separable part is configured to engage with the groove of the other separable part in a closed condition of the casting mold.
